# EUROPÄISCHE PATENTSCHRIFT

(11) **EP 3 038 870 B1**
(45) Veröffentlichungstag und Bekanntmachung des Hinweises auf die Patenterteilung: **19.07.2017**
(21) Anmeldenummer: 14755830.8
(22) Anmeldetag: 28.08.2014
(51) Int. Cl.: B60T 13/66, B60T 17/02, B60T 17/22, B60L 5/16

(54) **VERFAHREN UND EINRICHTUNG ZUR HILFSLUFTVERSORGUNG EINES SCHIENENFAHRZEUGES**
METHOD AND DEVICE FOR SUPPLYING AUXILIARY AIR TO A RAIL VEHICLE
PROCÉDÉ ET DISPOSITIF D'ALIMENTATION EN AIR AUXILIAIRE D'UN VÉHICULE FERROVIAIRE

(30) Priorität: 30.08.2013 DE 102013109475
(43) Veröffentlichungstag der Anmeldung: 06.07.2016
(73) Patentinhaber: KNORR-BREMSE Systeme für Schienenfahrzeuge GmbH, 80809 München (DE)
(72) Erfinder: URRA, Christian, 81371 München (DE); ASSMANN, Gert, 80337 München (DE); KIPP, Thomas, 81547 München (DE)
(86) Internationale Anmeldenummer: PCT/EP2014/068216
(87) Internationale Veröffentlichungsnummer: WO 2015/028532

(56) Entgegenhaltungen:
- AT-B- 388 900
- DE-A1- 2 800 877
- DE-A1- 10 126 042

## Beschreibung

Die Erfindung betrifft eine Druckluftversorgungseinrichtung eines Schienenfahrzeuges mit einem Hauptkompressor zur Erzeugung von Druckluft für ein pneumatisches Bremssystem sowie mit einer Fahrzeugbatterie zur elektrischen Energieversorgung, wobei Drucklufterzeugungsmittel zur zusätzlichen Hilfsluftversorgung für den Betrieb mindestens eines pneumatischen Aktuators im Rahmen eines Stellantriebs für einen Pantographen vorgesehen sind. Die Erfindung betrifft daneben auch ein Verfahren zum Betrieb einer solchen Druckluftversorgungseinrichtung sowie ein Schienenfahrzeug, das mit dieser Druckluftversorgungseinrichtung ausgestattet ist.

Das Einsatzgebiet der Erfindung erstreckt sich auf den Schienenfahrzeugbau. Schienenfahrzeuge, welche mit Pantographen zur Stromabnahme ausgerüstet sind, benötigen Hilfsenergie, um den Pantographen mit Hilfe eines Stellantriebs zwischen einer eingefahrenen Position und einer ausgefahrenen Position zu bewegen. Als Stellantriebe der hier interessierenden Art kommen pneumatische Aktuatoren, beispielsweise in Form von Druckmittelzylindern zum Einsatz, welche mit Hilfsenergie in Form von Druckluft zu versorgen sind.

Gemäß des allgemein bekannten Standes der Technik wird zur Hilfsluftversorgung ein separater Hilfsluftkompressor eingesetzt, welcher im Rahmen einer Hilfsluftversorgungsanlage zur Bereitstellung der pneumatischen Energie für den Stellantrieb eines Pantographen und dergleichen durch die Fahrzeugbatterie des Schienenfahrzeuges mit elektrischer Energie versorgt wird. Die elektrische Energie der Fahrzeugbatterie ist ausreichend, um den relativ klein dimensionierten Hilfsluftkompressor elektromotorisch anzutreiben, so dass genügend Druckluft zur Hilfsluftversorgung erzeugbar ist.

Allerdings verursacht eine solche Hilfsluftversorgungsanlage trotzt einer geringen Nutzung im gewöhnlich wöchentlichen Rhythmus einen recht hohen aggregatetechnischen Aufwand sowie Wartungsaufwand.

Aus der DE 28 00 877 A1 geht eine gattungsgemäße Druckluftversorgungseinrichtung eines Schienenfahrzeuges hervor. Die Druckluftversorgungseinrichtung umfasst einen zentral angeordneten Hauptkompressor zur Befüllung einer Hauptluftleitung mit Druckluft. Daneben ist zum Aufrüsten eines Phantographen ein separater Hilfsluftkompressor im Schienenfahrzeug vorgesehen, welchem ein Lufttrockner zugeordnet ist, um getrocknete Druckluft für das Anheben des Phantographen zu erzeugen. Der Hilfsluftkompressor wird hierzu über Akkumulatorbatterien mit elektrischer Energie versorgt und elektromotorisch angetrieben.

Es ist daher die Aufgabe der vorliegenden Erfindung eine Druckluftversorgungseinrichtung mit Drucklufterzeugungsmitteln zur zusätzlichen Hilfsluftversorgung zu schaffen, welche sich durch einen einfachen technischen Aufbau sowie einem geringen Wartungsaufwand auszeichnet.

Die Aufgabe wird ausgehend von einer Druckluftversorgungseinrichtung gemäß dem Oberbegriff von Anspruch 1 in Verbindung mit dessen kennzeichnenden Merkmalen gelöst. Verfahrenstechnisch wird die Aufgabe durch Anspruch 7 gelöst. Die jeweils rückbezogenen abhängigen Ansprüche geben vorteilhafte Weiterbildungen der Erfindung wieder.

Die Erfindung schließt die technische Lehre ein, dass die Drucklufterzeugungsmittel zur Hilfsluftversorgung einen elektrischen Frequenzumrichter zum Betreiben des elektromotorisch angetriebenen Hauptkompressors des Schienenfahrzeuges mit niedriger Drehzahl aus von der Fahrzeugbatterie bereitgestellter elektrischer Antriebsenergie umfassen, wobei eine Nebenleitung an der mit dem Hauptkompressor verbundenen Druckluftleitung angeschlossen ist, um hiervon die Hilfsluft für die Hilfsluftversorgung eines Aktuators des Hilfsluftkreises abzuzweigen.

Der Vorteil der erfindungsgemäßen Lösung liegt insbesondere darin, dass zusätzliche Komponenten einer Hilfsluftversorgung, wie ein Hilfsluftkompressor und dessen elektrische sowie pneumatische Anbindung entfallen können. Da sich die erfindungsgemäße Lösung durch eine kompakte Bauform auszeichnet, kann darüber hinaus entsprechender Bauraum eingespart werden. Denn für die erfindungsgemäße Lösung ist lediglich ein zusätzlicher elektrischer Frequenzumrichter in die elektrische Ausstattung des Schienenfahrzeuges mit zu integrieren, welcher elektrisch mit dem Antrieb des Hauptkompressors zu verbinden ist. Die von der Druckluftleitung des Kompressors abzweigende Nebenleitung lässt sich ebenfalls mit geringem Montageaufwand zum Steuerventil des als Stellantrieb dienenden pneumatischen Aktuators zur Bewegung des Pantographen verlegen.

Gemäß einer bevorzugten Ausführungsform der Erfindung ist dem Hauptkompressor des Schienenfahrzeuges ein Adsorptionslufttrockner oder anderer geeigneter Lufttrockner nachgeschaltet, an dessen ausgangsseitiger Druckluftleitung die Nebenleitung zum Anschluss des Hilfsluftkreises abzweigt. Die Druckluftleitung mündet vorzugsweise in einen nachgeordneten Vorratsdruckbehälter ein. An dieser speziellen Stelle der Druckluftleitung kann eine effiziente Entnahme der Hilfsluft erfolgen.

Zusätzlich kann in die Druckluftleitung im Bereich zwischen dem Lufttrockner und dem Vorratsdruckbehälter ein Mindestdruckventil angeordnet sein. Das Mindestdruckventil sollte dann mit zum Lufttrockner hin orientierter Sperrrichtung eingesetzt sein und die Nebenleitung zweigt bei dieser speziellen Ausführungsform im Bereich zwischen dem Adsoprtionslufttrockner und dem Mindestdruckventil von der Druckluftleitung ab. Hierdurch kann die Hilfsluftversorgung sichergestellt werden und eine Befüllung des Vorratsdruckbehälters erfolgt erst ab dem eingestellten Mindestdruck, welcher oberhalb von 4bar, vorzugsweise ab 8bar erfolgt.

Weitere die Erfindung verbessernden Maßnahmen sind in den abhängigen Ansprüchen angegeben oder werden nachstehend gemeinsam mit der Beschreibung eines bevorzugten Ausführungsbeispiels anhand der Figuren näher dargestellt. Es zeigt:
- Figur 1: eine schematische Darstellung einer in einem Schienenfahrzeug integrierten Druckluftversorgungseinrichtung mit zusätzlichen Hilfsluftversorgungsmitteln,
- Figur 2: eine schematische Darstellung der Hilfsluftentnahme aus der Druckluftleitung des Hauptkompressors.

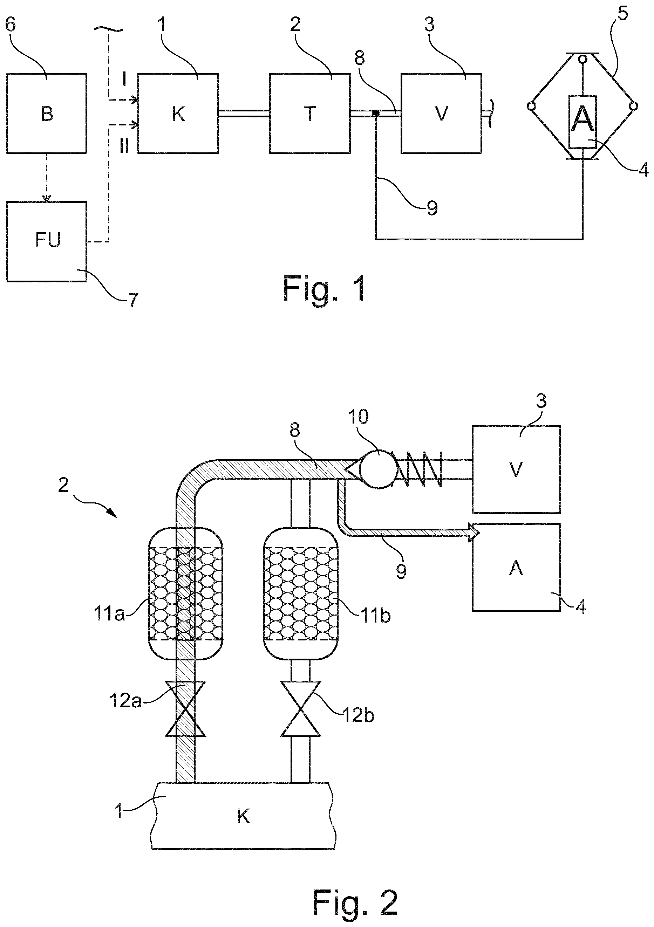

Gemäß Figur 1 wird zur Erzeugung von Druckluft für ein pneumatisches Bremssystems eines nicht weiter dargestellten Schienenfahrzeuges ein Hauptkompressor 1 eingesetzt. Der Hauptkompressor 1 wird über einen ersten elektrischen Anschluss I mit elektrischer Energie versorgt und elektromotorisch angetrieben. Die vom Hauptkompressor 1 erzeugte Druckluft passiert einen Adsorbitonslufttrockner 2, welchem ein Vorratsdruckbehälter 3 nachgeschaltet ist. Aus dem Vorratsdruckbehälter 3 erfolgt die Versorgung des pneumatischen Bremssystems des Schienenfahrzeuges.

Außerdem sind Drucklufterzeugungsmittel zur zusätzlichen Hilfsluftversorgung für den Betrieb eines pneumatischen Aktuators 4 im Rahmen eines Stellantriebs für einen Pantographen 5 vorgesehen. Hierfür wird aus der Fahrzeugbatterie 6 elektrische Energie entnommen, welche über einen elektrischen Frequenzumrichter 7 geführt wird, um den elektromotorisch angetriebenen Hauptkompressor 1 des Schienenfahrzeuges mit niedriger Drehzahl aus von der Fahrzeugbatterie 6 bereitgestellter elektrischer Energie über einen zweiten elektrischen Anschluss II anzutreiben. Hierdurch läuft der Hauptkompressor 1 mit geringerer aber für die Hilfsluftversorgung ausreichender Förderleistung und die geförderte Druckluft wird, nachdem diese den Adsorbtionslufttrockner 2 passiert hat, in die ausgangsseitige Druckluftleitung 8 geleitet. Von hier aus zweigt eine Nebenleitung 9 ab, um die Hilfsluft für die Hilfsluftversorgung des Aktuators 4 weiterzuleiten.

Gemäß Figur 2 ist in die Druckluftleitung 8 im Bereich zwischen dem Adsorbtionslufttrockner 2 und dem Vorratsdruckbehälter 3 ein Mindestdruckventil 10 mit zum Adsorbtionslufttrockner 2 hin orientierter Sperrrichtung angeordnet. Die Nebenleitung 9 ist von der Druckluftleitung 8 im Bereich zwischen dem Adsorbtionslufttrockner 2 und dem Mindestdruckventil 10 abgezweigt, um eine Beaufschlagung der Hilfsluftversorgung durch von im Vorratsdruckbehälter 3 befindlicher Druckluft zu vermeiden.

Der Adsorbtionslufttrockner 2 ist in diesem Ausführungsbeispiel nach Art eines Zweikammer-Trockners ausgebildet und umfasst dementsprechend zwei Trocknungsbehälter 11a und 11b, welche wechselseitig in einer Trocknungsphase und Regenerationsphase in allgemein bekannter Weise betreibbar sind. Hierfür erfolgt eine Umschaltung mit Hilfe von Ventilen 12a und 12b.

### Bezugszeichenliste

- 1: Hauptkompressor
- 2: Adsorbtionslufttrockner
- 3: Vorratsdruckbehälter
- 4: Aktuator
- 5: Pantograph
- 6: Fahrzeugbatterie
- 7: Frequenzumrichter
- 8: Druckluftleitung
- 9: Nebenleitung
- 10: Mindestdruckventil
- 11: Trocknungsbehälter
- 12: Ventil

## Patentansprüche

1. Druckluftversorgungseinrichtung eines Schienenfahrzeuges mit einem Hauptkompressor (1) zur Erzeugung von Druckluft für ein pneumatisches Bremssystem sowie mit einer Fahrzeugbatterie (6) zur elektrischen Energieversorgung, wobei Drucklufterzeugungsmittel zur zusätzlichen Hilfsluftversorgung für den Betrieb mindestens eines pneumatischen Aktuators (4) im Rahmen eines Stellantriebs für einen Pantographen (5) vorgesehen sind,
**dadurch gekennzeichnet, dass** die Drucklufterzeugungsmittel zur Hilfsluftversorgung einen elektrischen Frequenzumrichter (7) zum Betreiben des elektromotorisch angetriebenen Hauptkompressors (1) des Schienenfahrzeuges mit niedriger Drehzahl aus von der Fahrzeugbatterie (6) bereitgestellter elektrischer Antriebsenergie umfassen, wobei eine Nebenleitung (9) an der mit dem Hauptkompressor (1) verbundenen Druckluftleitung (8) angeschlossen ist, um hiervon die Hilfsluft für die Hilfsluftversorgung des Aktuators (4) abzuzweigen.

2. Druckluftversorgungseinrichtung nach Anspruch 1,
**dadurch gekennzeichnet, dass** dem Hauptkompressor (1) ein Adsorbtionslufttrockner (2) nachgeschaltet ist, an dessen ausgangsseitiger Druckluftleitung (8) die Nebenleitung (9) zum Anschluss des Hilfsluftkreises abzweigt.

3. Druckluftversorgungseinrichtung nach Anspruch 1,
**dadurch gekennzeichnet, dass** die Druckluftleitung (8) in einen Vorratsdruckbehälter (3) einmündet.

4. Druckluftversorgungseinrichtung nach Anspruch 2 und 3,
**dadurch gekennzeichnet, dass** in die Druckluftleitung (8) im Bereich zwischen Adsorbtionslufttrockner (2) und Vorratsdruckbehälter (3) ein Mindestdruckventil (10) mit zum Adsorbtionslufttrockner (2) hin orientierter Sperrrichtung angeordnet ist, wobei die Nebenleitung (9) von der Druckluftleitung (8) im Bereich zwischen dem Adsorbtionslufttrockner (2) und dem Mindestdruckventil (10) abzweigt.

5. Druckluftversorgungseinrichtung nach Anspruch 4,
**dadurch gekennzeichnet, dass** das Mindestdruckventil (10) oberhalb eines Drucks von 4 bar öffnet, vorzugsweise ab 8 bar.

6. Druckluftversorgungseinrichtung nach Anspruch 1,
**dadurch gekennzeichnet, dass** der Adsorbtionslufttrockner (2) nach Art eines Zweikammer-Trockners ausgebildet ist und zwei Trocknungsbehälter (11a, 11b) umfasst, die wechselseitig in einer Trocknungsphase und einer Regenerationsphase betreibbar sind.

7. Verfahren zum Betrieb einer Druckluftversorgungseinrichtung, wobei mit einem Hauptkompressor (1) Druckluft für ein pneumatisches Bremssystem erzeugt wird, und mit einer Fahrzeugbatterie (6) elektrische Energie bereitgestellt wird, und zusätzlich mindestens ein pneumatischer Aktuator (4) im Rahmen eines Stellantriebs für einen Pantographen (5) mit Hilfsluft versorgt wird,
**dadurch gekennzeichnet, dass** zur Hilfsluftversorgung der elektromotorisch angetriebene Hauptkompressor (1) des Schienenfahrzeuges durch einen elektrischen Frequenzumrichter (7) mit niedriger Drehzahl aus von der Fahrzeugbatterie (6) bereitgestellter elektrischer Antriebsenergie betrieben wird, wobei die Hilfsluft über eine Nebenleitung (9) aus einer am Hauptkompressor (1) angeschlossenen Druckluftleitung (8) abgezweigt wird.

8. Schienenfahrzeug mit mindestens einem Pantographen (5), dessen Stellantrieb in Form mindestens eines pneumatischen Aktuators (4) ausgebildet ist, den eine Druckluftversorgungseinrichtung nach einem der vorstehenden Ansprüche 1 bis 6 mit Druckluft versorgt.

## Claims

1. Compressed-air supply device of a rail vehicle, having a main compressor (1) for generating compressed air for a pneumatic brake system, and having a vehicle battery (6) for the supply of electrical energy, wherein compressed-air generating means are provided for the additional auxiliary-air supply for the operation of at least one pneumatic actuator (4) in the context of an actuating drive for a pantograph (5),
**characterized in that** the compressed-air generating means for the auxiliary-air supply comprise an electrical frequency inverter (7) for the operation of the electric motor-driven main compressor (1) of the rail vehicle at low rotational speed using electrical drive energy provided from the vehicle battery (6), wherein, to the compressed-air line (8) which is connected to the main compressor (1), there is attached a secondary line (9) in order for auxiliary air for the auxiliary-air supply to the actuator (4) to be branched off from said compressed-air line.

2. Compressed-air supply device according to Claim 1,
**characterized in that**, downstream of the main compressor (1), there is connected an adsorption-type air dryer (2), from the outlet-side compressed-air line (8) of which the secondary line (9) branches off for the attachment of the auxiliary air circuit.

3. Compressed-air supply device according to Claim 1,
**characterized in that** the compressed-air line (8) issues into a feed pressure vessel (3).

4. Compressed-air supply device according to Claim 2 and 3,
**characterized in that**, in the compressed-air line (8) in the region between adsorption-type air dryer (2) and feed pressure vessel (3), a minimum-pressure valve (10) is arranged with its blocking direction oriented toward the adsorption-type air dryer (2), wherein the secondary line (9) branches off from the compressed-air line (8) in the region between the adsorption-type air dryer (2) and the minimum-pressure valve (10).

5. Compressed-air supply device according to Claim 4,
**characterized in that** the minimum-pressure valve (10) opens above a pressure of 4 bar, preferably above 8 bar.

6. Compressed-air supply device according to Claim 1,
**characterized in that** the adsorption-type air dryer (2) is formed in the manner of a two-chamber dryer and comprises two drying vessels (11a, 11b) which can be operated alternately in a drying phase and in a regeneration phase.

7. Method for operating a compressed-air supply device, wherein compressed air for a pneumatic brake system is generated by way of a main compressor (1), and electrical energy is provided by way of a vehicle battery (6), and furthermore, at least one pneumatic actuator (4) in the context of an actuating drive for a pantograph (5) is supplied with auxiliary air,
**characterized in that**, for the auxiliary-air supply, the electric motor-driven main compressor (1) of the rail vehicle is operated at low rotational speed by way of an electrical frequency inverter (7) using electrical drive energy provided from the vehicle battery (6), wherein the auxiliary air is branched off, by way of a secondary line (9), from a compressed-air line (8) that is attached to the main compressor (1).

8. Rail vehicle having at least one pantograph (5), the actuating drive of which is in the form of at least one pneumatic actuator (4) to which compressed air is supplied by a compressed-air supply device according to one of the preceding Claims 1 to 6.

## Revendications

1. Dispositif d'alimentation en air comprimé d'un véhicule ferroviaire comprenant un compresseur (1) principal de production d'air comprimé, pour un système de freinage pneumatique, ainsi qu'une batterie (6) de véhicule, pour l'alimentation en énergie électrique, des moyens de production d'air comprimé, pour l'alimentation en air auxiliaire supplémentaire, pour le fonctionnement d'au moins un actionneur (4) pneumatique, étant prévus dans le cadre d'un organe moteur, pour un pantographe (5),
**caractérisé en ce que** les moyens de production d'air comprimé, pour l'alimentation en air auxiliaire, comprennent un convertisseur (7) électrique de fréquence, pour faire fonctionner le compresseur (1) principal, entraîné par moteur électrique, du véhicule ferroviaire, à une vitesse de rotation petite, à partir de l'énergie d'entraînement électrique mise à disposition par la batterie (6) du véhicule, un conduit (9) auxiliaire étant raccordé au conduit (8) pour de l'air comprimé, relié au compresseur (1) principal, pour en détourner l'air auxiliaire pour l'alimentation en air auxiliaire de l'actionneur (4).

2. Dispositif d'alimentation en air comprimé suivant la revendication 1,
**caractérisé en ce qu'**en aval du compresseur (1) principal est monté un sécheur (2) d'air par adsorption, du conduit (8) pour de l'air comprimé, du côté de la sortie duquel le conduit (9) auxiliaire est en dérivation, pour le raccordement du circuit d'air auxiliaire.

3. Dispositif d'alimentation en air comprimé suivant la revendication 1,
caractérisé en ce le conduit (8) pour de l'air comprimé débouche dans un réservoir (3) sous pression.

4. Dispositif d'alimentation en air comprimé suivant l'une quelconque des revendications 2 et 3,
**caractérisé en ce que**, dans le conduit (8) pour de l'air comprimé, dans la partie comprise entre le sécheur (2) d'air par adsorption et le réservoir (3) sous pression, est montée une soupape (10) à minimum de pression, à force d'obturation orientée vers le sécheur (2) d'air par adsorption, le conduit (9) auxiliaire étant en dérivation du conduit (8) pour de l'air comprimé, dans la partie comprise entre le sécheur (2) d'air par adsorption et la soupape (10) à minimum de pression.

5. Dispositif d'alimentation en air comprimé suivant la revendication 4,
**caractérisé en ce que** la soupape (10) à minimum de pression s'ouvre au dessus d'une pression de 4 bar, de préférence à partir de 8 bar.

6. Dispositif d'alimentation en air comprimé suivant la revendication 1,
**caractérisé en ce que** le sécheur (2) d'air par adsorption est constitué à la manière d'un sécheur à deux chambres et comprend deux récipients (11a, 11b) de séchage, qui peuvent fonctionner en alternance dans une phase de séchage et dans une phase de régénération.

7. Procédé pour faire fonctionner un dispositif d'alimentation en air comprimé, dans lequel on produit, par un compresseur (1) principal, de l'air comprimé pour un système de freinage pneumatique et on met à disposition de l'énergie électrique par une batterie (6) de véhicule et, en outre, on alimente au moins un actionneur (4) pneumatique en air auxiliaire, dans le cadre d'un organe moteur pour pantographe (5),
**caractérisé en ce que**, pour l'alimentation en air auxiliaire, on fait fonctionner le compresseur (1) principal entraîné par moteur électrique du ferroviaire, à partir de l'énergie d'entraînement électrique mis à disposition par la batterie (8) du véhicule, par un convertisseur (7) de fréquence électrique à vitesse de rotation petite, l'air auxiliaire étant détourné par un conduit (9) auxiliaire d'un conduit (8) d'air comprimé raccordé au compresseur (1) principal.

8. Véhicule ferroviaire comprenant au moins un pantographe (5), dont l'organe moteur est constitué sous la forme d'au moins un actionneur (4) pneumatique, qu'un dispositif d'alimentation en air comprimé suivant l'une des revendications précédentes 1 à 6 alimente en air comprimé.
